# EUROPÄISCHE PATENTSCHRIFT

(11) **EP 1 163 809 B1**
(45) Veröffentlichungstag und Bekanntmachung des Hinweises auf die Patenterteilung: **07.02.2007**
(21) Anmeldenummer: 00925055.6
(22) Anmeldetag: 28.03.2000
(51) Int. Cl.: H04Q 3/62, H04Q 11/04

(54) **VERMITTLUNGSEINRICHTUNG MIT ISDN-ANSCHLUSS**
NETWORK DEVICE WITH ISDN CONNECTION
DISPOSITIF DE COMMUTATION A CONNEXION RNIS (RESEAU NUMERIQUE A INTEGRATION DE SERVICES)

(30) Priorität: 30.03.1999 DE 19914511
(43) Veröffentlichungstag der Anmeldung: 19.12.2001
(73) Patentinhaber: SIEMENS AKTIENGESELLSCHAFT, 80333 München (DE)
(72) Erfinder: BEBKO, Thomas, D-59174 Kamen (DE)
(86) Internationale Anmeldenummer: PCT/DE2000/000947
(87) Internationale Veröffentlichungsnummer: WO 2000/060883

(56) Entgegenhaltungen:
- US-A- 5 875 234

## Beschreibung

Mit dem zunehmenden Angebot von digitalen Kommunikationsdiensten seitens der Kommunikationsdienstleister gewinnen Vermittlungseinrichtungen an Bedeutung, die sowohl analoge, als auch digitale Endgeräte bedienen können. Die zunehmende Nutzung des Mediums World Wide Web und die damit verbundene Zunahme der Bedeutung dieses Mediums bedingt ein wachsendes Bedürfnis seitens der Kommunikationsteilnehmer auch von kleineren und mittleren Vermittlungseinrichtungen aus Zugang zum World Wide Web zu haben. Das bei Kommunikationsteilnehmern vorhandene Bedürfnis der Verbindung von Personalcomputern (PC) mit Telefonanlagen wird derzeit beispielsweise von der Siemens AG durch eine private Nebenstellenanlage (PBX) befriedigt, welche als Steckkarte für einen Personalcomputer ausgeführt ist. Mittels dieser Telefonanlage besteht die Möglichkeit, digitale Endgeräte anzusteuern, PC-unterstützt zu telefonieren und auf dem PC die Administration und das Gebührenmanagement der Telefonanlage durchzuführen. Diese Möglichkeiten sind beispielsweise im World Wide Web unter der Adresse:
"http://www.siemens.de/ic/networks/pn_neu/km/hicomint/paar2.h tm" beschrieben.
Nachteilig ist in diesem Zusammenhang, daß zur Installation dieser Steckkarte das Gehäuse des Personalcomputers geöffnet werden muß, und daß Softwareadministrierungsmaßnahmen erforderlich sind, um einen sicheren Betrieb der privaten Nebenstellenanlage zu gewährleisten. Weiterhin ist es nachteilig, daß abhängig von neuen Betriebssystemversionen für den Personalcomputer die Administrationssoftware und die Anpassungssoftware der Nebenstellenanlage an den Personalcomputer weiterentwickelt werden muß.

Die der Erfindung zugrunde liegende Aufgabe besteht darin, die Nachteile bestehender Systeme zu vermeiden und aus PC-Umgebungen einen zusätzlichen Zugang zum ISDN (Integrated Services Digital Network) zu schaffen.

Aus der US-A-5 875 234 ist eine in einem Computer integrierte Nebenstelleneinrichtung bekannt, welche Nutz- und Steueratenanfragen überträgt, die von einer auf dem Computer ausgeführten Applikation angefordert worden sind.

Diese Aufgabe wird gemäß den Merkmalen des Patentanspruches 1 gelöst. Weiterbildungen der Erfindung ergeben sich aus den abhängigen Ansprüchen.

Vorteilhaft sind bei einer erfindungsgemäßen Vermittlungseinrichtung alle Mittel vorhanden, um die unterschiedlichen Bussysteme wie den Universal Serial Bus (USB), die Private Nebenstellenanlage und auch das ISDN miteinander zu verbinden. Durch den externen Anschluß über den USB treten keine Konflikte mit der PC internen Hardware auf. Weiterhin treten wegen der Auslagerung der privaten Nebenstellenanlage aus dem PC weniger EMV-Probleme (Elektro Magnetische Verträglichkeit) auf. Darüber hinaus ist es möglich, während des laufenden Betriebs des Personal Computers diese Vermittlungseinrichtung mit ISDN-Anschluß über eine USB-Schnittstelle einzurichten.

Vorteilhaft wird die Umsetzung zwischen USB-Kommunikationsdaten und ISDN-Kommunikationsdaten mit Hilfe eines Allzweckprozessors durchgeführt, da auf diese Weise der Hardwareentwicklungsaufwand gering gehalten werden kann und spezifische Umsetzanforderungen durch Software realisiert werden können.
Weiterhin kann vorteilhaft zum Zugriff auf den USB auf Standardcontroler zurückgegriffen werden.

Vorteilhaft kann bei einer Weiterbildung der Vermittlungseinrichtung eine zweite Funktionseinheit zur Umsetzung von ISDN-Kommunikationsdaten in PBX-Kommunikationsdaten auf einen Standarcibaustein zurückgegriffen werden, der zur Ansteuerung digitaler Endgeräte seitens der Privaten Nebenstellenanlage eingerichtet ist. Auf diese Weise werden aufwendige Entwicklungsmaßnahmen zur Gewährleistung einer Ansteuerung des ISDN vermieden.

Vorteilhaft wird bei einer Weiterbildung der beschriebenen Vermittlungseinrichtung zur Ansteuerung der zweiten Funktionseinheit in der Vermittlungseinrichtung eine dritte Funktionseinheit eingesetzt, welche üblicherweise zur Ansteuerung von digitalen Endgeräten durch die Vermittlungseinrichtung dient. Auf diese Weise wird unter minimalem Aufwand für die Hardwareentwicklung eine funktionsfähige Konfiguration zur Bereitstellung einer Privaten Nebenstellenanlage mit ISDN-Anschluß und gleichzeitigem Anschluß an Personalcomputer realisiert.

Vorteilhaft sind bei einer Weiterbildung der beschriebenen Vermittlungseinrichtung die erste und die zweite Funktionseinheit auf einer separaten Baugruppe angeordnet, weil auf diese Weise die ISDN-Funktionalität und die Anschlußfunktionalität an den USB separat ausführbar und herstellbar sind, während eine bereits vorhandene, auf einer Baugruppe realisierte private Nebenstellenanlage weiter genutzt werden kann.

Vorteilhaft werden bei einer Weiterbildung der beschriebenen Vermittlungseinrichtung eine bereits vorhandene Private Nebenstellenanlage und eine weitere Baugruppe mit ISDN- und USB- Anschlußfunktionalität kombiniert, weil auf diese Weise ein kompaktes Gerät zur Verfügung gestellt wird, welches separat verkauf- und wartbar ist.

Besonders vorteilhaft wird bei einer Weiterbildung der beschriebenen Vermittlungseinrichtung eine bereits vorhandene Private Nebenstellenanlage, die auf einer Baugruppe realisiert ist, direkt über eine Steckverbindung mit einer zweiten Baugruppe verbunden, welche an einen USB anschließbar ist und ISDN-Funktionalität, sowie die Austauschmöglichkeit von PBX-Kommunikationsdaten mit der Privaten Nebenstellenanlage aufweist.

Besonders vorteilhaft wird bei einer Weiterbildung der beschriebenen Vermittlungseinrichtung diese in einem LAN-Verbund (Local Area Network)eingesetzt, da so für alle am lokalen Netzwerk angeschlossenen Personalcomputer die Möglichkeit des Zugriffes auf das ISDN, bzw. auf die an die private Nebenstellenanlage angeschlossenen Kommunikationsgeräte und umgekehrt möglich ist.

Im folgenden wird die Erfindung anhand von Figuren weiter erläutert.
- Figur 1: zeigt dabei eine Vermittlungseinrichtung im LAN-Verbund
- Figur 2: zeigt schematisch verschiedene Funktionseinheiten eines Beispiels einer Vermittlungseinrichtung.

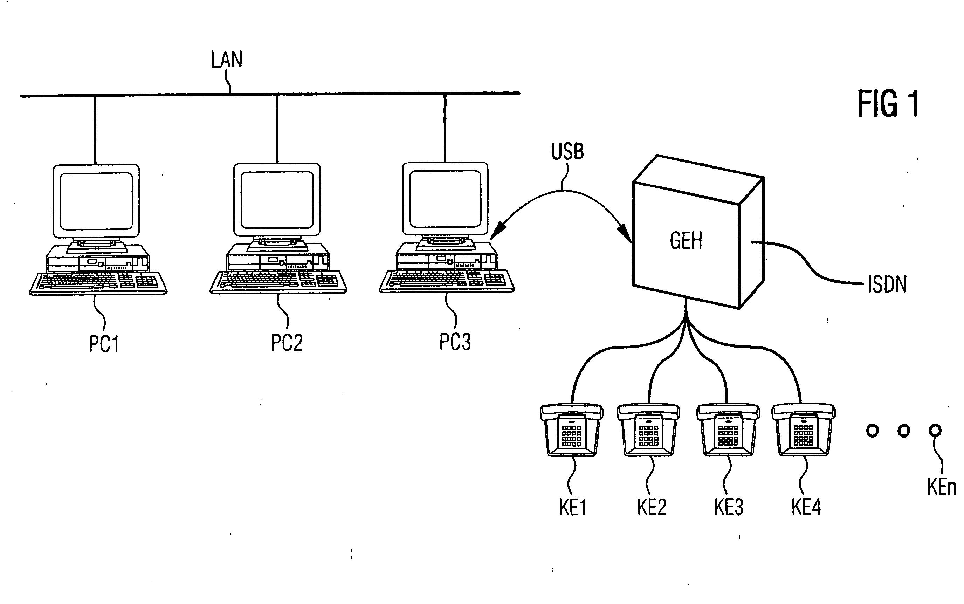

Wie Figur 1 zeigt, besteht eine beispielhafte Vermittlungseinrichtung aus einem lokalen Netzwerk LAN, an das Personalcomputer PC1, PC2 und PC3 angeschlossen sind. PC3 weist eine Schnittstelle zum Universal Serial Bus (USB) auf, an welchen von außen Peripheriebaugruppen, welche mit dem PC kommunizieren sollen, angeschlossen werden können. An diesen USB ist in einem Gehäuse GEH eine private Nebenstellenanlage mit ISDN Funktionalität angeschlossen. Diese private Nebenstellenanlage in dem Gehäuse GEH wiederum bedient beispielsweise Kommunikationsendgeräte KE1, KE4 bis KEn. Bevorzugt sind in diesem Gehäuse Funktionseinheiten auf zwei Baugruppen angeordnet, wobei die private Nebenstellenanlage auf einer Steckkarte für herkömmliche PC's ausgeführt ist, was bedeutet, daß ggf. eine IDE-Schnittstelle, oder eine PCI-Schnittstelle vorgesehen sein kann. Auf einer weiteren Baugruppe können Funktionseinheiten zur Umsetzung der PBX-Kommunikationsdaten, d.h. der Daten, welche von der privaten Nebenstellenanlage abgegeben werden, auf ISDN-Kommunikationsdaten, bzw. USB-Kommunikationsdaten vorgesehen sein. Bevorzugt ist diese Baugruppe derart ausgeführt, daß sie mittels einer Steckverbindung mit der privaten Nebenstellenanlage auf der anderen Steckkarte verbunden werden kann, und daß sie eine Steckverbindung zum USB aufweist. Mit Hilfe dieser Steckverbindung kann die im Gehäuse GEH befindliche Vermittlungseinrichtung mit dem USB des PC verbunden werden. Hier ist eine Verbindung zwischen den Funktionselementen im Gehäuse GEH und dem PC PC3 des lokalen Netzwerkes LAN dargestellt. Diese Verbindung ist mit USB bezeichnet. Weiterhin ist aus dem Gehäuse GEH eine ISDN-Anschlußleitung ISDN herausgeführt.

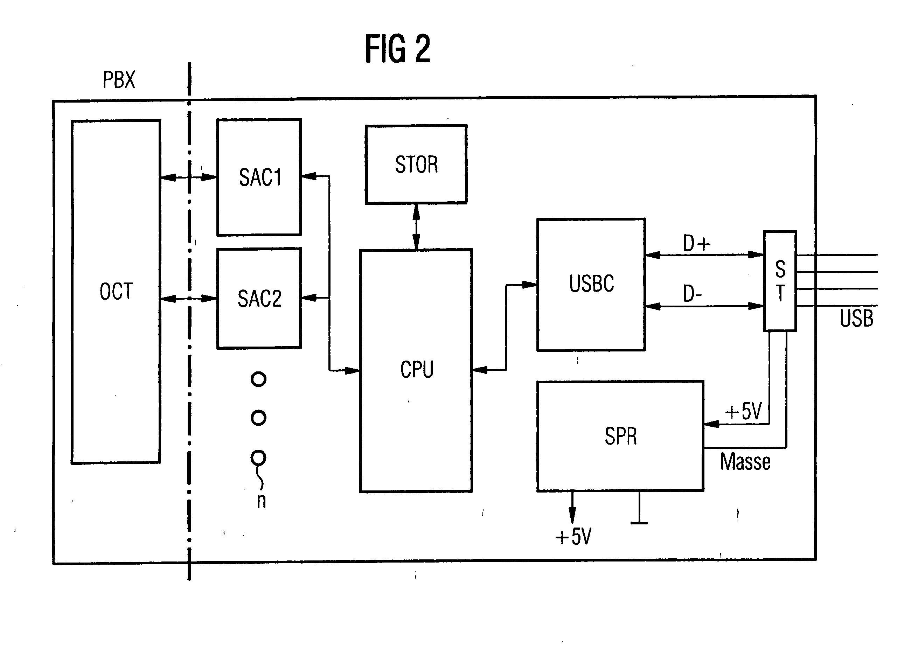

Figur 2 zeigt verschiedene Funktionselemente einer beispielhaften Vermittlungseinrichtung. Links von der gestrichelten Linie ist ein Funktionselement der privaten Nebenstellenanlage OCT dargestellt, wobei die private Nebenstellenanlage, die nicht komplett dargestellt ist, mit PBX bezeichnet ist. Diese Funktionseinheit OCT hat die Aufgabe, die mit der privaten Nebenstellenanlage auszutauschenden PBX-Kommunikationsdaten für die nachfolgenden bzw. umgekehrt von den nachfolgenden Bauelementen SAC aufzubereiten. Hier sind dargestellt Bauelemente SAC1, SAC2 bis SACn. Bei diesen Funktionseinheiten SAC handelt es sich um Teilnehmerzugriffscontroller, welche die Umsetzung der PBX-Kommunikationsdaten in ISDN-Kommunikationsdaten vornehmen. Aufgrund der beim USB vorhandenen Bandbreite von bis zu max. 12 Mbit/sek., können bis zu 8 solcher Teilnehmerzugriffscontroler SAC von einem Baustein OCT der privaten Nebenstellenanlage bedient werden. Pro Teilnehmerzugriffscontroler SAC sind dann zweimal 64 Kbit/sek. möglich, d.h. es können zwei I-SDN-B Kanäle zur Verfügung gestellt werden. D.h. durch diese Anordnung können 16 64Kbit/sek. breite B-Kanäle zur Verfügung gestellt werden, was dem zukünftigen Bedarf an Kommunikationsbandbreite Rechnung trägt. Die Umsetzung der ISDN-Kommunikationsdaten in USB-Kommunikationsdaten wird von einem Prozessor CPU durchgeführt, der sich zu dieser Umsetzung eines Programmes in einem Speicher STOR bedient. Der Zugriff auf den USB Bus wird von einem Kontrollbaustein USBC geregelt, der über Datenleitungen D+ und D- und über eine Steckverbindung an den USB angeschlossen ist. Eine Spannungsregelung SPR sorgt für definierte Potentiale in der dargestellten schematischen Schaltungsanordnung.

Bevorzugt wird die private Nebenstellenanlage PBX in Form einer Baugruppe ausgeführt, und mittels einer Steckverbindung über ein Kabel oder direkt mit einer Baugruppe verbunden, welche bevorzugt die Funktionsmerkmale der rechts von der gestrichelten Linie aufgeführten Funktionselemente aufweist. Auf diese Art und Weise wird es möglich, bereits vorhandene für den Einbau in Personalcomputer mit IDE bzw. ISA-Bus vorgesehene Vermittlungsbaugruppen einzusetzen. So wird eine Vermittlungseinrichtung mit ISDN-Anschluß in einem separaten Gehäuse zur Verfügung gestellt, das über den USB-Bus an einen Personalcomputer, an ein lokales Netzwerk über diesen Personalcomputer, oder andere Geräte mit USB-Schnittstelle angeschlossen werden kann. Auf diese Weise stehen für alle im Kommunikationsverbund mit dieser Vermittlungseinrichtung stehenden Kommunikationsendgeräte die Funktionalitäten von Filetransfer, Fax, CTI (Computer Telefon Integration) und WWW (World Wide Web) zur Verfügung. Die Kommunikation ist in jederlei Richtung über alle drei Kommunikationsmedien LAN, USB und ISDN, sowie im Bereich der privaten Nebenstellenanlage über die Telefonleitungen zu den Kommunikationsendgeräten möglich.

## Patentansprüche

1. Vermittlungseinrichtung mit ISDN-Anschluß,
a) bei der mindestens eine Rechnereinrichtung, insbesondere ein PC, mit einem Anschluß für einem universellen seriellen Bus (USB) vorhanden ist,
b) bei der eine separate Gehäuseeinheit (GEH) vorhanden ist, worin mindestens eine erste Funktionseinheit zur Umsetzung von ISDN-Kommunikationsdaten in USB-Kommunikationsdaten vorhanden ist,
c) bei der mindestens eine zweite Funktionseinheit zur Umsetzung von ISDN (Integrated Services Digital Network)-Kommunikationsdaten in Daten für eine private Vermittlungseinrichtung, in Form von PBX-Kommunikationsdaten vorhanden ist,
d) bei der in der Gehäuseeinheit (GEH) eine private Nebenstellenanlage (PBX) vorhanden ist,
e) und bei der die erste und die zweite Funktionseinheit, sowie die private Vermittlungseinrichtung so angeordnet und mit einander verschaltet sind, daß jede Art von Kommunikationsdaten in eine jeweils andere und umgekehrt umsetzbar ist.

2. Vermittlungseinrichtung nach Anspruch 1, bei der die erste Funktionseinheit als Allzweckprozessor (CPU) ausgebildet ist, der mittels eines Programms die Kommunikationsdaten umsetzt.

3. Vermittlungseinrichtung nach Anspruch 1 oder 2, bei der die zweite Funktionseinheit als Teilnehmerzugriffscontroler (SAC) ausgebildet ist, welcher ebenfalls in einem ISDN-Endgerät einsetzbar ist.

4. Vermittlungseinrichtung nach Anspruch 1, bei der die private Nebenstellenanlage (PBX) eine dritte Funktionseinheit (OCT) aufweist, welche derartig ausgebildet ist, daß sie ein ISDN-Endgerät ansteuern kann, wobei die dritte Funktionseinheit mit der zweiten Funktionseinheit verbunden ist, und mit ihr im Betrieb PBX-Kommunikationsdaten austauscht.

5. Vermittlungseinrichtung nach einem der vorangehenden Ansprüche, bei der in der Gehäuseeinheit (GEH) eine erste Baugruppe vorhanden ist, auf welcher mindestens die erste und die zweite Funktionseinheit angeordnet sind.

6. Vermittlungseinrichtung nach Anspruch 5, bei der in der Gehäuseeinheit (GEH) eine zweite Baugruppe vorhanden ist, auf der wenigstens die dritte Funktionseinheit angeordnet ist.

7. Vermittlungseinrichtung nach Anspruch 6, bei der die erste und die zweite Baugruppe durch eine Steckverbindung miteinander verbunden sind.

8. Vermittlungseinrichtung nach einem der vorhergehenden Ansprüche bei der der PC in ein lokales Netzwerk (LAN) eingebunden ist, und mindestens Mittel vorgesehen sind, zur Umsetzung von LAN-Kommunikationsdaten in USB-Kommunikationsdaten.

## Claims

1. Switching apparatus with ISDN access,
a) wherein at least one computer device, in particular a PC, having an interface for a Universal Serial Bus (USB) is present,
b) wherein a separate housing unit (GEH) is present, in which at least one first function unit for converting ISDN communication data into USB communication data is present,
c) wherein at least one second function unit for converting ISDN (Integrated Services Digital Network) communication data into data for a private switching apparatus, in the form of PBX communication data, is present,
d) wherein a private switch apparatus (PBX) is present in the housing unit (GEH),
e) and wherein the first and the second function unit, as well as the private switching apparatus, are arranged and interconnected in such a way that every type of communication data can be converted into respective other communication data and vice versa.

2. Switching apparatus according to claim 1, wherein the first function unit is designed as a general-purpose processor (CPU) which converts the communication data by means of a program.

3. Switching apparatus according to claim 1 or 2, wherein the second function unit is designed as a subscriber access controller (SAC), which can likewise be used in an ISDN terminal.

4. Switching apparatus according to claim 1, wherein the private branch exchange (PBX) has a third function unit (OCT) which is designed in such a way that it can drive an ISDN terminal, with the third function unit being connected to the second function unit and exchanging PBX communication data with it during operation.

5. Switching apparatus according to one of the preceding claims, wherein a first module on which at least the first and the second function unit are arranged is present in the housing unit (GEH).

6. Switching apparatus according to claim 5, wherein a second module on which at least the third function unit is arranged is present in the housing unit (GEH).

7. Switching apparatus according to claim 6, wherein the first and the second module are connected to one another by means of a plug connection.

8. Switching apparatus according to one of the preceding claims, wherein the PC is integrated in a local area network (LAN), and at least means for converting LAN communication data into USB communication data are provided.

## Revendications

1. Equipement de transmission avec raccordement ISDN,
a) sur lequel est présent au moins un ordinateur, en particulier un PC, avec un branchement pour un bus série universel (USB)
b) sur lequel est présente une unité de boîtier séparée (GEH), dans laquelle est présente au moins une première unité fonctionnelle pour la conversion de données de communication ISDN en données de communication USB,
c) sur lequel est présente au moins une seconde unité fonctionnelle pour la conversion de données de communication ISDN (Integrated Services Digital Network) en données pour un équipement de transmission privé, sous la forme de données de communication PBX,
d) sur lequel est présent dans l'unité de boîtier (GEH) un poste supplémentaire privé (PBX),
e) et sur lequel la première et la seconde unités fonctionnelles ainsi que l'équipement de transmission privé sont disposés et câblés les uns avec les autres de façon que tout type de données de communication puisse être converti dans un autre et inversement.

2. Equipement de transmission selon la revendication 1, dans lequel la première unité fonctionnelle est réalisée sous la forme d'un processeur universel (CPU), qui convertit les données de communication au moyen d'un programme.

3. Equipement de transmission selon la revendication 1 ou 2, dans lequel la seconde unité fonctionnelle est réalisée sous la forme d'un contrôleur d'accès universel (SAC), qui peut être utilisé également dans un terminal ISDN.

4. Equipement de transmission selon la revendication 1, dans lequel le poste supplémentaire privé (PBX) présente une troisième unité fonctionnelle (OCT) qui est conçue de telle sorte qu'elle peut actionner un terminal ISDN, la troisième unité fonctionnelle étant reliée à la seconde unité fonctionnelle, et échangeant des données de communication PBX dans le service avec cette unité.

5. Equipement de transmission selon l'une quelconque des revendications précédentes, dans lequel est présent dans l'unité de boîtier (GEH) un premier ensemble sur lequel sont disposées au moins la première et seconde unités fonctionnelles.

6. Equipement de transmission selon la revendication 5, dans lequel est présent dans l'unité de boîtier (GEH) un second ensemble sur lequel est disposée au moins la troisième unité fonctionnelle.

7. Equipement de transmission selon la revendication 6, dans lequel le premier et le second ensembles sont reliés entre eux par une liaison à fiche.

8. Equipement de transmission selon l'une quelconque des revendications précédentes, dans lequel le PC est intégré dans un réseau local (LAN), et sont prévus au moins des moyens pour la conversion de données de communication LAN en données de communication USB.
